# EUROPEAN PATENT APPLICATION

(11) **EP 3 110 237 A1**
(43) Date of publication of application: **28.12.2016**
(21) Application number: 16175879.2
(22) Date of filing: 23.06.2016
(51) Int. Cl.: H05B 37/02

(54) **WIRELESS DETECTOIN DEVICE AND LIGHTING DEVICE INCLUDING THE SAME**

(30) Priority: 26.06.2015 TW 104120814
(71) Applicant: Hep Tech Co. Ltd., 408 Taichung City (TW)
(72) Inventor: CHEN, Po-Yen, 11670 Taipei City (TW); HUNG, Ta-Sheng, 408 Taichung City (TW); LIU, Chen-Yu, 406 Taichung City (TW)
(74) Representative: Lermer, Christoph

(57) **Abstract**

A wireless detection device may be applied to a lighting device. The wireless detection device may include a connection interface, a detection module, a processing module and a wireless communication module. The connection interface may be detachable coupled to the power conversion module of the lighting device, and coupled to the lighting module of the lighting device via the power conversion module. The detection module may be coupled to the connection module and may detect the change of the environment around the detection module to generate a detection signal. The processing module may be coupled to the detection module and the connection module. The wireless communication module may be coupled to the processing module. The detection module may transmit the detection signal to the power conversion module via the connection interface and/or transmit the detection signal to other lighting devices via the wireless communication module.

## Description

### CROSS REFERENCE TO RELATED APPLICATION

This application also claims priority to Taiwan Patent Application No. 104120814 filed in the Taiwan Patent Office on June 26, 2015, the entire content of which is incorporated herein by reference.

### TECHNICAL FIELD

The present invention relates to a wireless detection device, in particular to a wireless detection device capable of detecting environmental changes. The present invention further relates to a lighting device including the wireless detection device.

### BACKGROUND

Currently, a building is usually installed with various conventional detectors, such as temperature detector, light detector, humidity detector, CO₂ detector, CO detector and smoke detector, etc.; these detectors can detect various environmental changes for people to take necessary measures according to these changes; however, the conventional detectors still have a lot of shortcomings to be overcome.

If a building needs to be installed with a lot of conventional detectors, the building should provide one dedicated line for each of the detectors, which significantly increases the installation cost of the detectors.

Also, the building also needs to provide one dedicated space for each of the detectors, so these detectors will occupy a lot of space, which is very inconvenient in use.

In addition, one conventional detector usually has only one function; for example, the temperature sensor cannot be used to detect humidity, so the conventional detectors are inflexible in use.

Further, the conventional detectors only have detection function, but cannot be connected to other lighting devices so as to control these devices according to the detection signals, which limits the application range of the conventional detectors.

Therefore, it has become an important issue to provide a detector capable of improving the shortcomings of the conventional detectors.

### SUMMARY

A wireless detection device applicable to a lighting device is provided, which may include a connection interface, a detection module, a processing module and a wireless communication module. The connection interface may be detachable coupled to the power conversion module of the lighting device, and coupled to the lighting module of the lighting device via the power conversion module. The detection module may be coupled to the connection module and may detect the change of the environment around the detection module to generate a detection signal. The processing module may be coupled to the detection module and the connection module. The wireless communication module may be coupled to the processing module. The detection module may transmit the detection signal to the power conversion module via the connection interface and/or transmit the detection signal to other lighting devices via the wireless communication module.

A lighting device is provided, which may include a power conversion module, a lighting module and a wireless detection device, and the wireless detection device may include a connection interface, a detection module, a processing module and a wireless communication module. The connection interface may be detachable coupled to the power conversion module of the lighting device, and coupled to the lighting module of the lighting device via the power conversion module. The detection module may be coupled to the connection module and may detect the change of the environment around the detection module to generate a detection signal. The processing module may be coupled to the detection module and the connection module. The wireless communication module may be coupled to the processing module. The detection module may transmit the detection signal to the power conversion module via the connection interface and/or transmit the detection signal to other lighting devices via the wireless communication module.

In a preferred embodiment of the present invention, the connection interface may be a plug-and-play interface.

In a preferred embodiment of the present invention, the plug-and-play interface may be a USB interface.

In a preferred embodiment of the present invention, the power conversion module may be electrical ballast.

In a preferred embodiment of the present invention, the lighting module may be a gas-discharge lamp.

In a preferred embodiment of the present invention, the gas-discharge lamp may be a mercury lamp, a metal halide lamp, a sodium lamp, a fluorescent lamp or a xenon lamp.

In a preferred embodiment of the present invention, the power conversion module may be a LED driver.

In a preferred embodiment of the present invention, the lighting module may be a LED lamp.

In a preferred embodiment of the present invention, the wireless detection may include a plurality of the detection modules, and the detection modules may include two or more than two of a temperature detector, a light detector, a humidity detector, a CO₂ detector, a CO detector and a smoke detector.

In a preferred embodiment of the present invention, the processing module may be a microcontroller unit.

The wireless detection device and the lighting device having same have one or more of the following advantages:
(1)According to the embodiments of the present invention, the wireless detection can be coupled to the lighting device, so the lighting device can execute the corresponding operation according to the detection signal of the wireless detection device; thus, the wireless detection device is of wide application.
(2)According to the embodiments of the present invention, the wireless detection device can be directly coupled to the power conversion module via the plug-and-play interface; therefore, the wireless detection device can directly use the wiring of the lighting control system without dedicated line, so the cost can be significantly reduced.
(3)According to the embodiments of the present invention, the wireless detection device can be directly coupled to the power conversion module via the plug-and-play interface without occupying additional space, which is more convenient in use.
(4)According to the embodiments of the present invention, the wireless detection device can simultaneously have various detection modules, so can provide various detection functions, which is more flexible in use.
(5)According to the embodiments of the present invention, the wireless detection device can be not only coupled to the lighting device so as to execute the corresponding operation according to the detection signal of the wireless detection device, but also can transmit the detection signal to other lighting devices via the wireless communication module for other lighting devices to execute the corresponding operation according to the detection signal of the wireless detection device; therefore, the wireless detection device can provide better function.
(6)According to the embodiments of the present invention, the wireless detection device can be directly coupled to the lighting device via the plug-and-play interface, so consumers can determine to purchase the wireless detection device or not according to their requirements, which provides more choices for consumers; accordingly, the lighting device can have high commercial value.

Further scope of applicability of the present application will become more apparent from the detailed description given hereinafter. However, it should be understood that the detailed description and specific examples, while indicating exemplary embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is a block diagram of one embodiment of a wireless detection device in accordance with the present invention.
FIG. 2 is a schematic view of a first embodiment of a wireless detection device in accordance with the present invention.
FIG. 3 is a schematic view of a second embodiment of a wireless detection device in accordance with the present invention.
FIG. 4 is a schematic view of a third embodiment of a wireless detection device in accordance with the present invention.
FIG. 5 is a schematic view of a fourth embodiment of a wireless detection device in accordance with the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

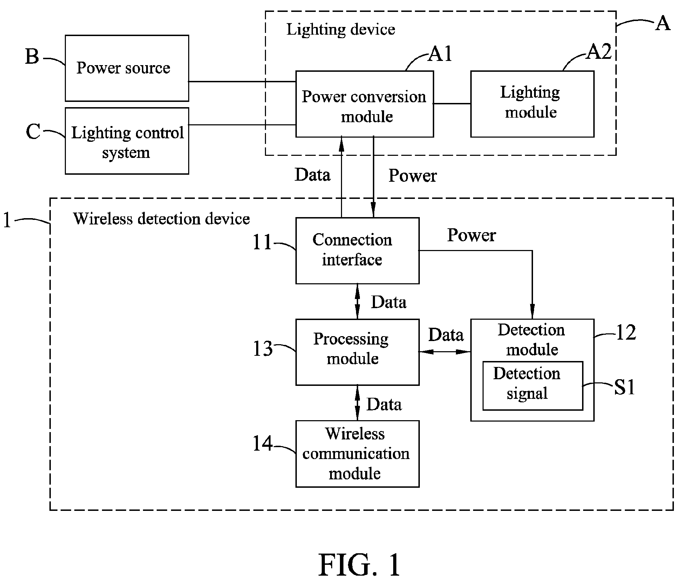

Please refer to FIG. 1, which is a block diagram of one embodiment of a wireless detection device in accordance with the present invention. As shown in FIG. 1, the wireless detection device 1 may be coupled to a lighting device A, and the lighting device A may include a power conversion module A1 and a lighting module A2; the power conversion module A1 may be coupled to a power source B and a lighting control system C, and controlled by the lighting control system C. The wireless detection device 1 may include a connection interface 11, a detection module 12, a processing module 13 and a wireless communication module 14.

The connection interface 11 may be detachably coupled to the power conversion module A1 of the lighting device A, and then coupled to the lighting module A2 of the lighting device A via the power conversion module A1; preferably, the connection interface 11 may be a plug-and-play interface, such a USB interface, etc. The detection module 12 may be coupled to the connection interface 11, and may detect the change of the surrounding environment to generate a detection signal S1; preferably, the detection module 12 may be a temperature detector, a light detector, a humidity detector, a CO₂ detector, a CO detector and a smoke detector; preferably, the wireless detection device 1 may include a plurality of detection modules 12, and the detection modules 12 may include two or more than two of the temperature detector, the light detector, the humidity detector, the CO₂ detector, the CO detector and the smoke detector. The processing module 13 may be a microcontroller unit (MCU) or the like. The detection module 12 may transmit the detection signal S1 to the power conversion module A1 via the connection interface 11 or transmit the detection signal S1 to the wireless communication module 14 via the processing module 13 so as to transmit the detection signal S1 to other lighting devices A.

In this way, the lighting device A can execute the corresponding operation according to the detection signal S1. In addition, the detection module 12 may further transmit the detection signal S1 to other lighting devices A via the wireless communication module 14 for other lighting devices A to execute the corresponding operation according to the detection signal S1. Besides, the wireless detection device 1 can be integrated with the lighting device A via the connection interface 11, so the wireless detection device 1 does not need a dedicated line and space; accordingly, the installation cost of the wireless detection device 1 can be significantly reduced.

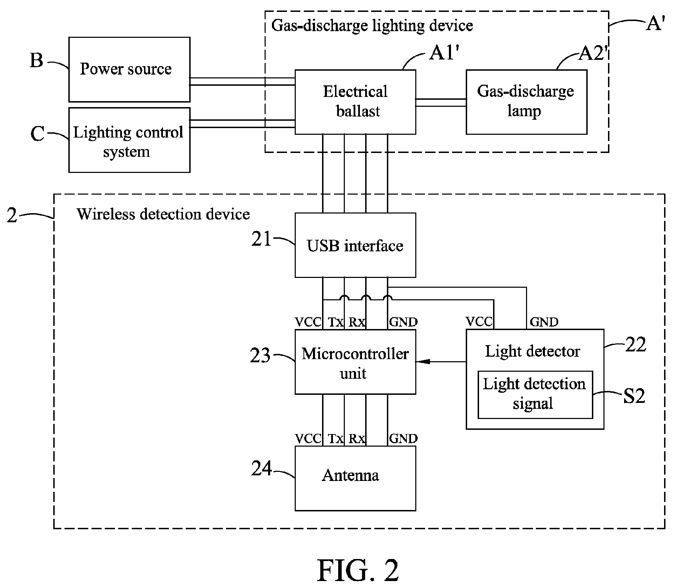

Please refer to FIG. 2, which is a schematic view of a first embodiment of a wireless detection device in accordance with the present invention; the embodiment illustrates an example that the wireless detection device is applied to a gas-discharge lighting device.

As shown in FIG. 2, the wireless detection device 2 may be coupled to a gas-discharge lighting device A', and the gas-discharge lighting device A' may include an electrical ballast A1' and a gas-discharge lamp A2'; the electrical ballast A1' may be coupled to a power source B and a lighting control system C, and controlled by the lighting control system C. The wireless detection device 2 may include a USB interface 21, a light detector 22, a microcontroller unit 23 and an antenna 24.

The USB interface 21 may be detachably coupled to the electrical ballast A1' of the gas-discharge lighting device A', and then coupled to the gas-discharge lamp A2' of the gas-discharge lighting device A' via the electrical ballast A1'. The light detector 22 may be coupled to the USB interface 21, and may detect the change of the light of the surrounding environment to generate a light detection signal S2. The microcontroller unit 23 may be coupled to the light detector 22 and the USB interface 21. The antenna 24 may be coupled to the microcontroller unit 23. The light detector 22 may transmit the light detection signal S2 to the electrical ballast A1' via the USB interface 21 or transmit the light detection signal S2 to the antenna 24 via the microcontroller unit 23 so as to transmit the light detection signal S2 to other gas-discharge lighting devices A'.

In this way, the gas-discharge lighting device A' can execute the corresponding operation according to the light detection signal S2. In addition, the light detector 22 may further transmit the light detection signal S2 to other lighting gas-discharge devices A' via the antenna 24 for other gas-discharge lighting devices A' to execute the corresponding operation according to the light detection signal S2.

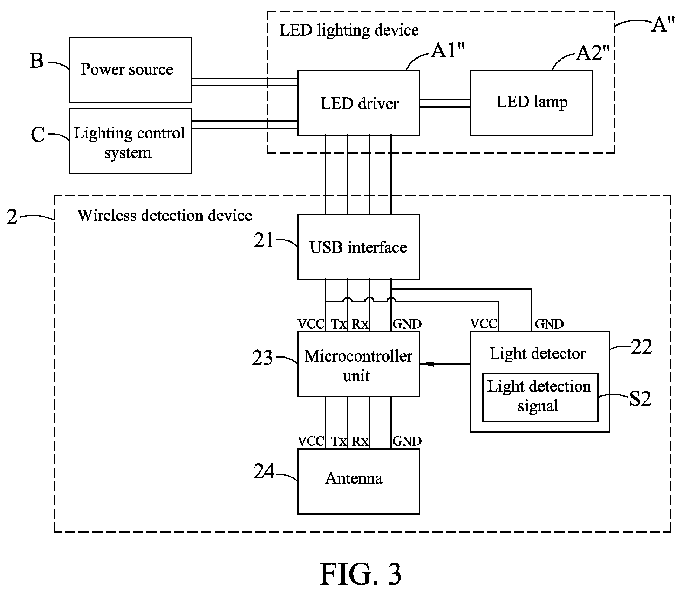

Please refer to FIG. 3, which is a schematic view of a second embodiment of a wireless detection device in accordance with the present invention; the embodiment illustrates an example that the wireless detection device is applied to a LED lighting device.

As shown in FIG. 3, the wireless detection device 2 may be coupled to a LED lighting device A", and the LED lighting device A" may include a LED driver A1" and a LED lamp A2"; the LED driver A1" may be coupled to a power source B and a lighting control system C, and controlled by the lighting control system C. The wireless detection device 2 may include a USB interface 21, a light detector 22, a microcontroller unit 23 and an antenna 24.

Similarly, the USB interface 21 may be detachably coupled to the LED driver A1" of the LED lighting device A", and then coupled to the LED lamp A2" of the LED lighting device A" via the LED driver A1 ". The light detector 22 may be coupled to the USB interface 21, and may detect the change of the light of the surrounding environment to generate a light detection signal S2. The microcontroller unit 23 may be coupled to the light detector 22 and the USB interface 21. The antenna 24 may be coupled to the microcontroller unit 23. The light detector 22 may transmit the light detection signal S2 to the LED driver A1" via the USB interface 21 or transmit the light detection signal S2 to the antenna 24 via the microcontroller unit 23 so as to transmit the light detection signal S2 to other LED lighting devices A".

In this way, the LED lighting device A" can execute the corresponding operation according to the light detection signal S2. In addition, the light detector 22 may further transmit the light detection signal S2 to other LED lighting devices A" via the antenna 24 for other LED lighting devices A" to execute the corresponding operation according to the light detection signal S2.

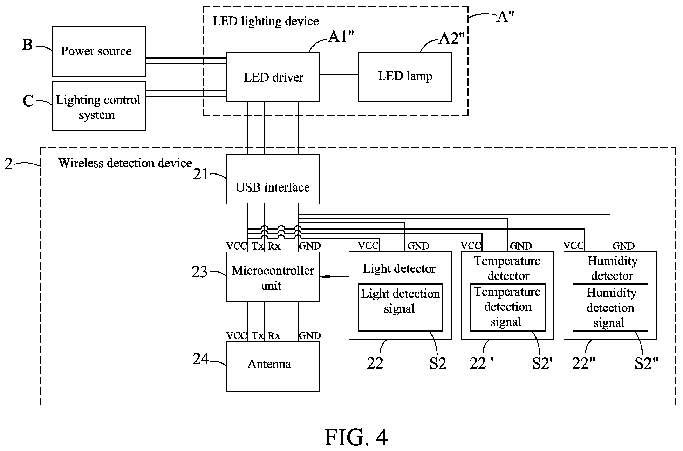

Please refer to FIG. 4, which is a schematic view of a third embodiment of a wireless detection device in accordance with the present invention; the embodiment illustrates an example that the wireless detection device has multiple detection modules.

As shown in FIG. 4, the wireless detection device 2 may be coupled to a LED lighting device A", and the LED lighting device A" may include a LED driver A1" and a LED lamp A2"; the LED driver A1" may be coupled to a power source B and a lighting control system C, and controlled by the lighting control system C. The wireless detection device 2 may include a USB interface 21, a light detector 22, a temperature detector 22', a humidity detector 22", a microcontroller unit 23 and an antenna 24.

Similarly, the USB interface 21 may be detachably coupled to the LED driver A1" of the LED lighting device A", and then coupled to the LED lamp A2" of the LED lighting device A" via the LED driver A1". The light detector 22, the temperature detector 22' and the humidity detector 22" may be coupled to the USB interface 21; the light detector 22 may detect the change of the light of the surrounding environment to generate a light detection signal S2; the temperature detector 22' may detect the change of the temperature of the surrounding environment to generate a temperature detection signal S2'; the humidity detector 22" may detector the change of the humidity of the surrounding environment to generate a humidity detection signal S2".

The microcontroller unit 23 may be coupled to the light detector 22, the temperature 22', the humidity detector 22" and the USB interface 21. The antenna 24 may be coupled to the microcontroller unit 23. The light detector 22, the temperature detector 22' and the humidity detector 22" may respectively transmit the light detection signal S2, the temperature detection signal S2' and the humidity detection signal S2" to the LED driver A1" via the USB interface 21 or transmit the light detection signal S2, the temperature detection signal S2' and the humidity detection signal S2" to the antenna 24 via the microcontroller unit 23 so as to transmit the light detection signal S2, the temperature detection signal S2' and the humidity detection signal S2" to other LED lighting devices A".

In this way, the LED lighting device A" can execute the corresponding operations according to the light detection signal S2, the temperature detection signal S2' and the humidity detection signal S2". In addition, the light detection signal S2, the temperature detection signal S2' and the humidity detection signal S2" may further be transmitted to other LED lighting devices A" via the antenna 24 for other LED lighting devices A" to execute the corresponding operations according to the light detection signal S2, the temperature detection signal S2' and the humidity detection signal S2".

It is worthy to point out that the conventional detector only has the detection functions but cannot be coupled to other lighting devices for these lighting devices to execute the corresponding operation according to the detection signal of the detector; accordingly, the application of the conventional detector is limited. On the contrary, according to the embodiments of the present invention, the wireless detection device can be directly coupled to the power conversion module of the lighting device via the plug-and-play interface to be integrated with the lighting device, so the lighting device can execute the corresponding operation according to the detection signal of the wireless detection device; thus, the wireless detection device can be of wide application.

The conventional detector need a dedicated line; therefore, if a building needs to be installed with a lot of conventional detectors, the building should provide one dedicated line for each of the detectors, which significantly increases the installation cost of the detectors. On the contrary, according to the embodiments of the present invention, the wireless detection device can be directly coupled to the power conversion module via the plug-and-play interface; therefore, the wireless detection device can directly use the wiring of the lighting control system without dedicated line, so the installation cost of the wireless detection device can be significantly reduced.

Similarly, the conventional detector need a dedicated space; therefore, if a building needs to be installed with a lot of conventional detectors, these detector will occupy a lot of space, which is very inconvenient in use. On the contrary, according to the embodiments of the present invention, the wireless detection device can be directly coupled to the power conversion module via the plug-and-play interface without occupying additional space, which is more convenient in use.

Also, the conventional detector, in general, provides only one function, so is very inflexible in use. On the contrary, according to the embodiments of the present invention, the wireless detection device can simultaneously have various detection modules, so can provide various detection functions, which is more flexible in use.

Besides, the conventional detector, in general, only has the detection function, so the application of the conventional detector is limited. On the contrary, according to the embodiments of the present invention, the wireless detection device can be not only coupled to the lighting device so as to execute the corresponding operation according to the detection signal of the wireless detection device, but also can transmit the detection signal to other lighting devices via the wireless communication module for other lighting devices to execute the corresponding operation according to the detection signal of the wireless detection device; therefore, the wireless detection device can provide better function and be of wide application.

Moreover, according to the embodiments of the present invention, the wireless detection device can be directly coupled to the lighting device via the plug-and-play interface, so consumers can determine to purchase the wireless detection device or not according to their requirements, which provides more choices for consumers; accordingly, the lighting device can have high commercial value. Accordingly, the present invention defmitely has an inventive step.

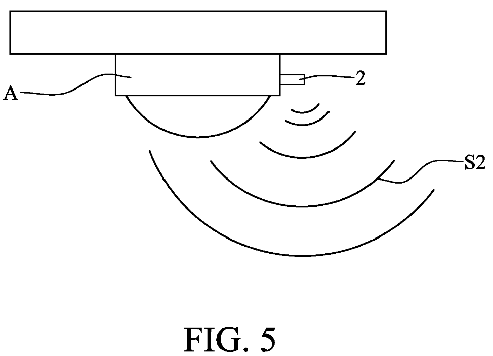

Please refer to FIG. 5, which is a schematic view of a fourth embodiment of a wireless detection device in accordance with the present invention; the embodiment illustrates a usage situation of the wireless detection device.

As shown in FIG. 5, the wireless detection device 2 may be coupled to the lighting device A via a USB interface, and the light detector of the wireless detection device 2 may transmit the light detection signal S2 to the lighting device A via the USB interface; therefore, the lighting device A can execute the corresponding operation according to the lighting detection signal S2 of the wireless detection device 2, or transmit the light detection signal S2 to other lighting devices for other lighting devices to execute the corresponding operation according to the lighting detection signal S2 of the wireless detection device 2.

To sum up, according to the embodiments of the present invention, the wireless detection can be coupled to the lighting device, so the lighting device can execute the corresponding operation according to the detection signal of the wireless detection device; thus, the wireless detection device is of wide application.

According to the embodiments of the present invention, the wireless detection device can be directly coupled to the power conversion module via the plug-and-play interface; therefore, the wireless detection device can directly use the wiring of the lighting control system without dedicated line, so the cost can be significantly reduced.

According to the embodiments of the present invention, the wireless detection device can be directly coupled to the power conversion module via the plug-and-play interface without occupying additional space, which is more convenient in use.

Also, according to the embodiments of the present invention, the wireless detection device can simultaneously have various detection modules, so can provide various detection functions, which is more flexible in use.

Besides, according to the embodiments of the present invention, the wireless detection device can be not only coupled to the lighting device so as to execute the corresponding operation according to the detection signal of the wireless detection device, but also can transmit the detection signal to other lighting devices via the wireless communication module for other lighting devices to execute the corresponding operation according to the detection signal of the wireless detection device; therefore, the wireless detection device can provide better function.

Moreover, according to the embodiments of the present invention, the wireless detection device can be directly coupled to the lighting device via the plug-and-play interface, so consumers can determine to purchase the wireless detection device or not according to their requirements, which provides more choices for consumers; accordingly, the lighting device can have high commercial value.

It will be apparent to those skilled in the art that various modifications and variations can be made to the disclosed embodiments. It is intended that the specification and examples be considered as exemplary only, with a true scope of the invention being indicated by the following claims and their equivalents.

## Claims

1. A wireless detection device applied to a lighting device, comprising:
a connection interface, detachable coupled to a power conversion module of the lighting device, and coupled to a lighting module of the lighting device via the power conversion module;
at least one detection module, coupled to the connection interface, and configured to detect a change of an surrounding environment and then generate at least one detection signal;
a processing module, coupled to the detection module and the connection interface; and
a wireless communication module, coupled to the processing module;
wherein the detection module transmits the detection signal to the power conversion module via the connection interface, and/or transmits the detection signal to the wireless communication module via the processing module so as to send out the detection signal.

2. The wireless detection device of claim 1, wherein the connection interface is a plug-and-play interface.

3. The wireless detection device of claim 2, wherein the plug-and-play interface is a USB interface.

4. The wireless detection device of claim 1, wherein the power conversion module is an electrical ballast, and the lighting module is a gas-discharge lamp, and the gas-discharge lamp is a mercury lamp, a metal halide lamp, a sodium lamp, a fluorescent lamp or a xenon lamp.

5. The wireless detection device of claim 1, wherein the power conversion module is a LED driver, and the lighting is a LED lamp.

6. The wireless detection device of claim 1, wherein the wireless detection comprises a plurality of the detection modules, and the detection modules comprise two or more than two of a temperature detector, a light detector, a humidity detector, a CO₂ detector, a CO detector and a smoke detector.

7. The wireless detection device of claim 1, wherein the processing module is a microcontroller unit.

8. A lighting device, comprising a power conversion module, a lighting module and a wireless detection device, and the wireless detection device comprising:
a connection interface, detachable coupled to a power conversion module of the lighting device, and coupled to a lighting module of the lighting device via the power conversion module;
at least one detection module, coupled to the connection interface, and configured to detect a change of an surrounding environment and then generate at least one detection signal;
a processing module, coupled to the detection module and the connection interface; and
a wireless communication module, coupled to the processing module;
wherein the detection module transmits the detection signal to the power conversion module via the connection interface, and/or transmits the detection signal to the wireless communication module via the processing module so as to send out the detection signal.

9. The lighting device of claim 8, wherein the connection interface is a plug-and-play interface.

10. The lighting device of claim 9, wherein the plug-and-play interface is a USB interface.

11. The lighting device of claim 8, wherein the power conversion module is electrical ballast, and the lighting module is a gas-discharge lamp, and the gas-discharge lamp is a mercury lamp, a metal halide lamp, a sodium lamp, a fluorescent lamp or a xenon lamp.

12. The lighting device of claim 8, wherein the power conversion module is a LED driver, and the lighting module is a LED lamp.

13. The lighting device of claim 8, wherein the wireless detection comprises a plurality of the detection modules, and the detection modules comprise two or more than two of a temperature detector, a light detector, a humidity detector, a CO₂ detector, a CO detector and a smoke detector.

14. The lighting device of claim 8, wherein the processing module is a microcontroller unit.
